Europäisches Patentamt

(19) European Patent Office

Office européen des brevets

(11) Numéro de publication: **0 048 662**
**A1**

(12) # DEMANDE DE BREVET EUROPEEN

(21) Numéro de dépôt: **81401431.2**

(22) Date de dépôt: **14.09.81**

(51) Int. Cl.³: **G 06 F 3/04**

(30) Priorité: **16.09.80 FR 8019953**

(43) Date de publication de la demande:
**31.03.82 Bulletin 82/13**

(84) Etats contractants désignés:
**DE FR NL SE**

(71) Demandeur: **COMPAGNIE INTERNATIONALE POUR
L'INFORMATIQUE CII - HONEYWELL BULL (dite CII-HB)
94, avenue Gambetta
F-75020 Paris(FR)**

(72) Inventeur: **Ugon, Michel
94, avenue Gambetta
F-75020 Paris(FR)**

(74) Mandataire: **Doireau, Marc
94 avenue Gambetta
F-75960 Paris cedex 20(FR)**

(54) Coupleur de supports électroniques amovibles.

(57) Le coupleur permet l'adaptation d'un support électronique amovible sur un autre équipement électronique. Il est constitué d'un premier moyen I3 de réception et de connexion d'au moins un support amovible, un deuxième moyen (INT, S1) de dialogue bidirectionnel entre le dit support amovible et le coupleur, un troisième moyen de dialogue entre le coupleur et l'équipement, des moyens de transmission des informations BA, BD et BC, échangées par les moyens dialogue, disposés entre les dits deuxième et troisième moyens, le support amovible comprenant des moyens de connexion AC avec le premier moyen, des moyens de dialogue avec le deuxième moyen ainsi que des moyens de mémorisation volatiles ou non.

Application: Couplage de lignes de transmission.

FIG.1

EP 0 048 662 A1

Coupleur de supports électroniques amovibles

La présente invention concerne un coupleur de supports d'informations électroniques amovibles du type de ceux comprenant un microprocesseur associé à au moins une mémoire morte programmable, ledit microprocesseur étant pourvu de moyens d'écriture et de lecture d'informations dans la dite mémoire morte programmable.

Un support d'informations de ce type est décrit dans les demandes de brevet françaises n° 77 26 107 et 78 12 119 de la Demanderesse.

Ces supports de par la nature même de leur technologie de fabrication et par celle confidentielle des problèmes qu'ils permettent de résoudre, doivent présenter vis à vis du mileu extérieur une interface spécifique adaptée à leurs fonctionnalités. Le mot interface désignant ici l'ensemble des moyens formant la frontière entre deux systèmes, organes machines, etc... leur permettant une mise en communication directe.

Dans certaines applications du traitement de l'information il peut être intéressant de pouvoir exploiter les informations confidentielles ou non contenues dans le support d'informations pour les y introduire dans des machines de traitement de l'information qui ne possèdent pas l'interface requis sans avoir à remettre en cause la structure des dites machines.

Il est connu que les machines de traitement de l'information telles que les ordinateurs, leurs périphériques, les terminaux, les distributeurs, les caisses enregistreuses ou point de vente, etc... possèdent en général un ou plusieurs moyens de communication externes dont certains correspondent à des interfaces normalisées.

Une première classe de machines présente au moins une interface parallèle fondée, en général, sur des échanges d'octets, des signaux de service pour connaître les états des stations émettrices et réceptrices dans chaque phase des échanges, et de signaux de synchronisation pour cadencer ces échanges.

Une deuxième classe de machines ou d'appareils présente une interface sérialisée qui correspond à des échanges de signaux en série sur une ou plusieurs liaisons entre deux stations successivement ou simultanément émettrice ou réceptrice. Par exemple, il est connu de l'homme de l'art, la façon de réaliser une telle interface en application de l'avis V24 du CC ITT qui définit la fonction et les signaux transitant dans chaque sens entre les deux stations.

Une troisième catégorie de machines possède une interface sérialisée multipoints qui permet des échanges entre un émetteur et plusieurs récepteurs répartis sur une même ligne de communication.

Chacune des stations réceptrices étant appelée successivement par l'émetteur pour exécuter des fonctions propres à chacune d'elles.

C'est donc un but de l'invention de permettre la connexion d'un support électronique amovible, présentant une interface spécifique, sur un matériel existant possédant une interface parallèle ou sérialisée.

Pour atteindre cet objectif, l'appareil de couplage de supports électroniques amovibles, sur un autre équipement électronique comprend selon l'invention un premier moyen de réception et de connexion d'au moins un support amovible, un deuxième moyen permettant un dialogue bidirectionnel entre le dit support amovible et l'appareil de couplage, un troisième moyen permettant le dialogue entre l'appareil de couplage et l'équipement, ledit support amovible comprenant, des moyens de connexion au dit premier moyen, des moyens de dialogue avec le deuxième moyen ainsi que des moyens de mémorisation d'informations traitées par ou transférées par les dits moyens de dialogue bidirectionnel.

L'invention sera mieux comprise à l'aide de la description fait au regard des dessins qui va suivre.

La figure 1 représente un synoptique fonctionnel d'un coupleur possédant à la fois une interface parallèle et une interface série.

La figure 2 représente un organe émetteur ou récepteur utilisé pour réaliser l'interface entre le coupleur et un support amovible.

La figure 3 représente le diagramme des temps correspondant à la transmission d'un message d'un octet selon l'invention.

La figure 4 représente les circuits nécessaires à la transmission bidirectionnelle des messages selon l'invention.

La figure 5 est une représentation des circuits de commande de la figure 2.

La figure 6 est une réprésentation des registres de travail du microprocesseur 8080 commercialisé par la Société INTEL et utilisé dans la mise en oeuvre des émetteurs récepteurs de l'invention.

La figure 7 est un organigramme correspondant au fonctionnement du programme d'émission des informations sur la ligne de transmission.

La figure 8 est un organigramme correspondant au programme permettant le test de l'état de la ligne de transmission entre deux émissions.

Les figures 9 et 10 sont des organigrammes correspondants aux programmes de lecture des informations transmises par l'émetteur et reçues par le récepteur.

La figure 11 représente un synoptique fonctionnel de coupleur possédant plusieurs interfaces série.

La figure 12 donne un exemple de réalisation de l'appareil utilisant un microprocesseur central.

La figure 13 donne un exemple de réalisation d'un coupleur réalisé avec un microprocesseur monolithique.

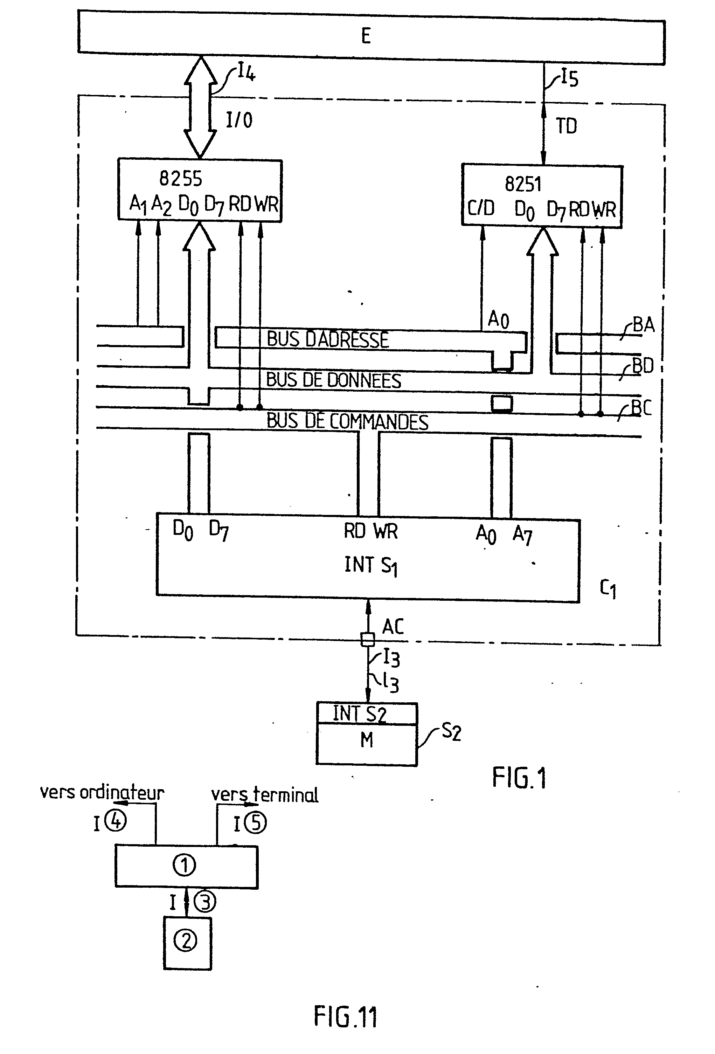

Le coupleur $C_1$ représenté à la figure 1 réalise l'adaptation entre un support amovible $S_2$ et un équipement électronique E. Ce coupleur réalise la combinaison d'au moins deux interfaces. La première interface $I_3$ est dotée de moyens de dialogue bidirectionnels $INTS_1$ et $INTS_2$. Les informations transitent entre le coupleur par l'intermédiaire d'un seul fil (ligne $l_3$ au travers de moyens de connexion AC). Une description des moyens de connexion AC pourra être trouvée dans la demande de brevet française n° 78 36 544 déposée au nom de la Demanderesse.

La deuxième interface est du type parallèle et permet la connexion sur tous les matériels possédant cette interface. La réalisation de cette interface peut être faite à l'aide du composant 8255 commercialisé par la Sociéte INTEL.

La troisième interface $I_5$ est du type série et permet de connecter sur tous les matériels possédant ce type d'interface, un support électronique amovible. Il est connu des composants standard du commerce réalisant ce type d'interface, par exemple le circuit 8251 commercialisé par la Société INTEL.

La communication entre les diverses interfaces est réalisée à l'aide des bus de données BD d'adresse BA et de commande BC. La synchronisation des messages transmis est réalisée à l'aide d'un microprocesseur du type 8085 commercialisé par la Société INTEL contenu à l'intérieur des circuits $INTS_1$ de commande de l'interface $I_3$. Le support amovible $S_2$ comprend des moyens $INTS_2$ pour dialoguer avec les moyens $INTS_1$ associés à des moyens de mémorisation M volatiles ou non volatiles.

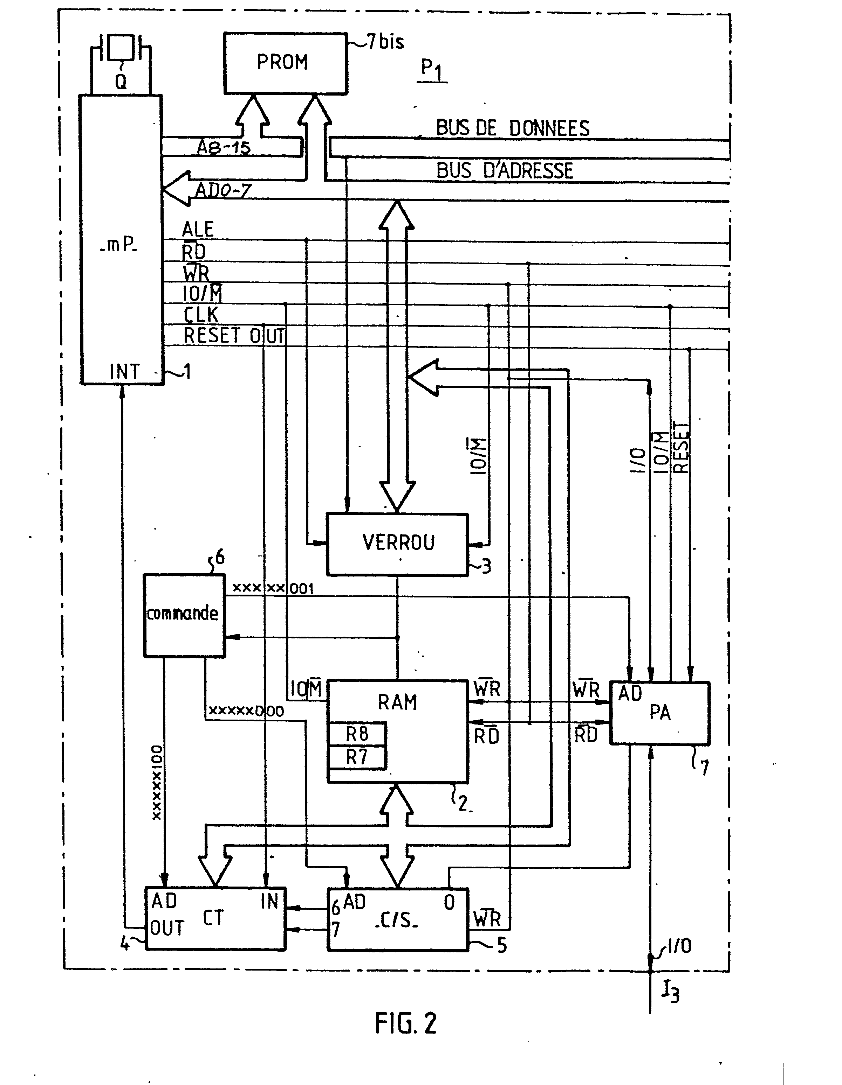

La figure 2 représente le dispositif d'émission et de réception constituant le circuit $INTS_1$ et permettant le dialogue entre le coupleur et le support amovible. Le circuit $INTS_1$ comprend au moins un microprocesseur 1, associé à un dispositif de commande des entrées/sorties des informations entrantes ou sortantes de la station, constitué par un dispositif de mémorisation 2, un dispositif de verrouillage 3, un compteur de temps 4, un registre d'états C/S 5, un organe de commande 6, une mémoire PROM7bis et un circuit 7 de transmission et réception des données connectées au conducteur de données $I_3$. Le microprocesseur 1 est comme déjà dit un microprocesseur du type 8080 ou 8085 commercialisé par la Société INTEL. Ce microprocesseur est connecté par les lignes d'adresse $A_{0-7}$ et de données $AD_{0-7}$ aux circuits 8255 et 8251 de la figure 1. Les 8 lignes de données $AD_{0-7}$ sont reliées à l'entrée d'un registre à verrouillage 3 pour adresser la mémoire à accès aléatoire RAM2. Cette mémoire RAM2 peut avoir une capacité de 2 K bits organisée en 256 X 8 bits. Elle contient un registre R7 pour mémoriser l'octet transféré au travers de la porte PA7 et un registre R8 pour mémoriser le bit de parité correspondant à l'octet transféré. Le registre 3 sélectionne aussi par l'état de ses sorties l'organe de commande 6.

L'organe de commande 6 sélectionne le circuit 7 de transmission réception des données lorsque la configuration binaire mémorisée dans le registre 3 est XXXXX001, il sélectionne le registre d'état 5 lorsque la configuration binaire dans le registre 3 est XXXXX000 et enfin il sélectionne le compteur de temps 7 lorsque la configuration binaire dans le registre 3 est XXXXX100. Le compteur de temps 4 a ses entrées parallèlement reliées aux lignes de données $AD_{0-7}$ de façon à pouvoir être chargé à tout moment par le microprocesseur à une valeur de temps initiale. Le registre d'état C/S 5 est lui aussi relié aux lignes $AD_{0-7}$ pour lui permettre de mémoriser un ordre envoyé par le microprocesseur. C'est un registre à 8 bascules dont les états permettent la sélection soit du circuit d'entrée/sortie PA7 ou du compteur de temps CT4. La ligne ADE connecte le microprocesseur au regsitre 3 et transporte le signal de verrouillage du registre 3 pour autoriser ou non l'adressage de la mémoire RAM2 et de l'organe de commande 6.

La ligne IO/M sélectionne soit la mémoire RAM2 soit le circuit 7 d'entrée/sortie. Les lignes RD et WR commandent les opérations de lecture/écriture et sont reliées aux circuits de commandes appropriés de la mémoire RAM2 et du circuit 7.

Le microprocesseur est synchronisé par une horloge Q qui peut être un quartz, il transmet des signaux d'horloge sur la ligne CLK à l'entrée IN du compteur de temps CT4. La ligne RESET out est reliée à l'entrée du circuit 7 et permet d'initialiser le système en mode d'entrée/sortie.

La sortie du compteur de temps CT4 est reliée à l'entrée INT du microprocesseur 1 pour délivrer un signal d'interruption du traitement qui est en cours lorsque la valeur du compte initialement chargé à l'intérieur du compteur de temps CT4 est épuisée. Le microprocesseur 1 est également relié par ses lignes de données et d'adresse à une mémoire morte 7bis dans laquelle figurent inscrits les programmes nécessaires à la transmission et à la réception des données par la station $P_1$. Des circuits INTS 2 identiques à ceux décrits pour la constitution du circuit INTS 1 seront utilisés pour la constitution des moyens de dialogue du support amovible S2.

Le récepteur reçoit les signaux transmis dans ces 10 moments et effectue un contrôle de parité pendant le 11ème. Le récepteur signale à l'émetteur qu'il est prêt à recevoir un message en positionnant le conducteur I3 à un potentiel VO (signal PR). Ce signal est positionné au moins un moment avant l'émission du signal START. Après réception et contrôle, le récepteur positionne l'état du conducteur I3 à un potentiel V1 pendant la durée d'un moment. Si le contrôle de parité effectué sur le message révèle qu'il y a eu erreur, on revient au potentiel VO de départ si la transmission a eu lieu correctement.

Les 8 bits d'information constituant un octet sont transférés en série sur le conducteur $I_3$ et sont rangés successivement dans le registre R7 de la mémoire RAM2.

Ce transfert s'effectue par lecture successive de la porte PA7, transfert successif dans le registre accumulateur du microprocesseur récepteur et transfert après alignement du registre accumulateur dans le registre R7 de la mémoire RAM2. A chaque nouveau bit transféré un bit de parité est calculé en tenant compte de la parité des bits déjà reçus, le résultat du calcul est consigné dans le registre R8 de la mémoire RAM2. Le bit de fin de message qui sert aussi de bit de parité pour le message transmis est comparé au bit de

parité calculé et mémorisé dans le registre R8, s'il y a égalité de valeur entre les deux bits la transmission sera reconnue comme correcte, sinon, cette anomalie sera signalée à l'émetteur par émission au niveau du récepteur du signal ER.

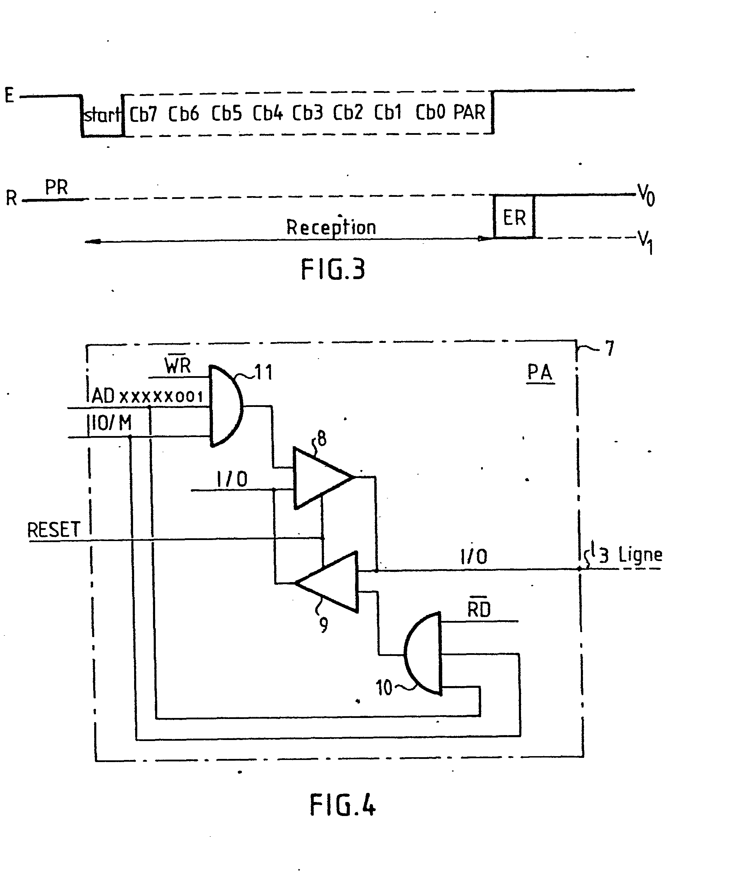

La figure 4 est une représentation du circuit PA7 de la figure 2. Ce circuit se compose des amplificateurs trois états 8 et 9 munis de leurs portes de commande 10 et 11. La sortie de l'amplificateur 8 est reliée à l'entrée de l'amplificateur 9, ces deux amplificateurs sont connectés au conducteur 13 de façon à pouvoir utiliser l'amplificateur 8 pour transmettre les données (I/0), sur le conducteur 13 et l'amplificateur 9 pour recevoir les données (I/0), transmises sur le conducteur 13.

La porte 11 commande l'amplificateur 8 lorsqu'elle est sélectionnée, par la combinaison XXXXX001 reçue par l'organe de commande 6, par la ligne IO/M, et lorsqu'il s'agit d'un ordre d'écriture WR transmis par le microprocesseur 1. De même, la porte 10 commande l'amplificateur 9 lorsqu'elle est sélectionnée, par la combinaison XXXXX001, la ligne IO/M et cette fois lorsqu'il s'agit d'un ordre de lecture RD transmis par le microprocesseur 1. Les amplificateurs 8 et 9 peuvent être initialisés par le signal RESET.

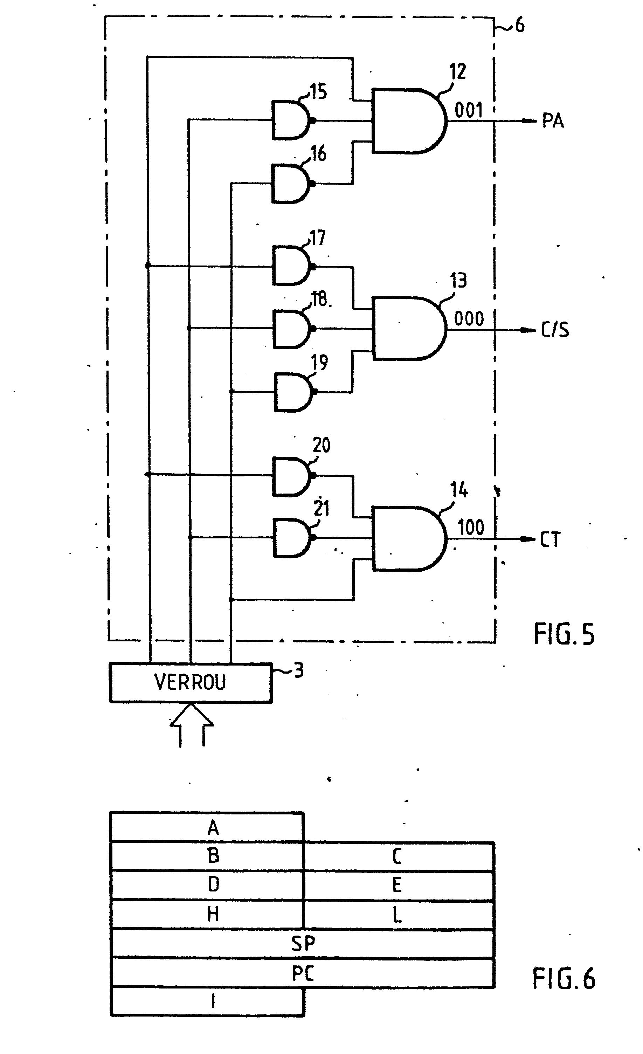

Le circuit de commande 6 est représenté sur la figure 6. Il s'agit d'un simple circuit de décodage des informations contenues dans le registre 5. Les circuits 12, 15 et 16 décodent le signal d'adresse XXXXX001 pour sélectionner le circuit PA7. Les circuits 13, 17, 18, 19 décodent le signal d'adresse XXXXX000 pour sélectionner le registre d'état C/S 5. Les circuits 14, 20 et 21 décodent le signal d'adresse XXXXX100 pour sélectionner le compteur de temps CT4.

La figure 6 donne une représentation des registres de travail contenus dans un microprocesseur du type 8080 ou 8085. Le registre A correspond à l'accumulateur.

Les registres B, C, D, E sont des registres de travail et sont spécialisés pour recevoir des données. Les registres H et L sont des registres d'adresse. Le registre SP contient l'adresse d'un registre de pile et est utilisé lors des interruptions de traitement pour pointer vers l'adresse d'une pile en mémoire pour sauver le contenu de certains registres du microprocesseur ou pour reprendre des traitements interrompus. Le registre PC est le compteur de programme et permet dans l'exécution d'un programme le passage à l'instruction suivante. Le registre I est un registre d'index qui permet l'adressage de données par indexation.

Les détails relatifs à la fonctionnalité de ces registres sont donnés dans le livre intitulé "les microprocesseurs" de Pierre Le Beux et Rodnay Zaks édité par la Société d'édition Sybex - 313 rue Lecourbe 75015 PARIS - C 1977.

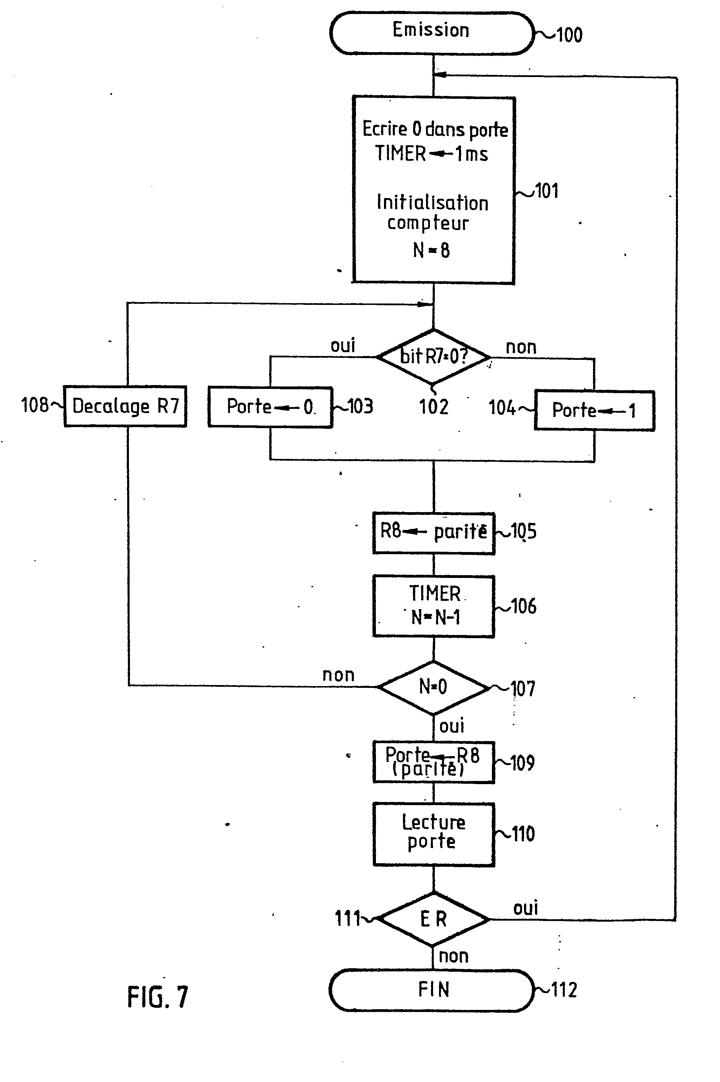

L'organigramme de la figure 7 représente les différentes étapes nécessaires au déroulement du microprogramme exécuté par le microprocesseur de la station émettrice. A l'étape 101 le microprocesseur émetteur positionne la ligne $l_3$ de liaison à l'état 0 logique et change le compteur de temps à la valeur du temps nécessaire pour l'émission du signal START et de l'octet qui suit de la façon représentée sur la figure 3. La fin de l'émission du signal START provoque une interruption du microprocesseur 1. L'octet à transférer contenu dans le registre R7 de la mémoire RAM2 est alors chargé dans le registre accumulateur A du microprocesseur 1 pour tester la valeur du premier bit (étape 102). La porte PA7 transmet la valeur correspondante du premier bit lu dans le registre R7 et sur le conducteur $l_3$ aux étapes 103 et 104. A l'étape 105 le bit de parité correspondant au message à transmettre est calculé et transmis dans une position de bit du registre R8 de la mémoire RAM2. A l'étape 108 le contenu du registre R7 est décalé d'une position binaire vers la gauche.

Ce processus se reproduit à chaque signal d'interruption délivré par le compteur de temps, il se termine lorsque tous les bits de l'octet ont été successivement transférés. L'étape 107 consiste à vérifier que tous les bits ont été transférés. A l'étape 109 le bit de parité mémorisé dans le registre R8 est à son tour transféré. Le récepteur peut alors calculer la parité des bits de l'octet reçu, au bit de parité qu'il a également reçu. S'il y a coïncidence le cycle de transmission s'achève (étape 112). S'il n'y a pas coïncidence, le récepteur signale à l'émetteur qu'il y a erreur (signal ER figure 3) et un nouveau cycle de transmission est exécuté à partir de l'étape 101.

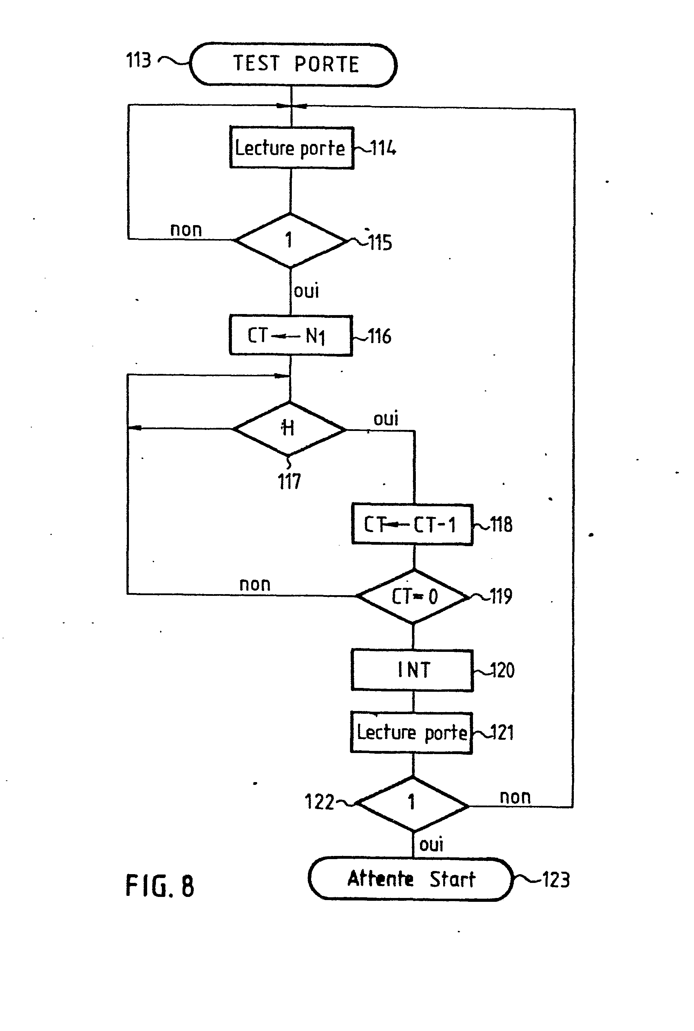

La figure 8 est un organigramme montrant les opérations effectuées par le récepteur lorsqu'il est en attente d'un message en provenance de l'émetteur. Ces tests se font par lectures répétées de l'état de la ligne de transmission 1₃. A l'étape 114, la porte PA7 est lue de façon répétée tant que l'état de la ligne 1₃ est à 0. Lorsque l'état de la ligne devient 1 (étape 115) le compteur CT4 est chargé à une valeur de temps prédéterminée (étape 116) de façon à occasionner une interruption du traitement du microprocesseur et provoquer une lecture de l'état de la porte PA7 lorsque cette valeur de temps est épuisée. Ce test a lieu à l'étape 122. Si à cette étape, l'état de la porte est à 1, le récepteur se met en attente du signal START, par contre, si l'état de la porte est à 0 il faut en conclure que le test effectué à l'étape 115 a eu lieu sur un parasite, le récepteur retourne alors à l'étape 114.

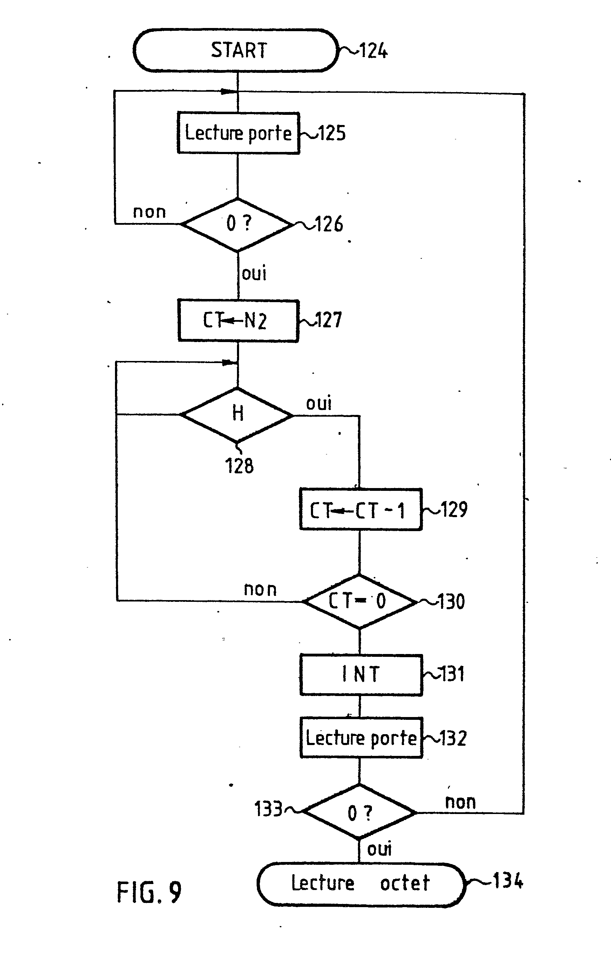

La figure 9 est une représentation de la séquence de réception du signal START. A l'étape 125 le récepteur lit l'état de la porte PA7. Le compteur de temps CT4 est chargé à une valeur de temps prédéterminé $N_2$ dès que l'état du conducteur $l_3$ prend la valeur 0. Cette valeur de temps est décrémentée à l'étape 129 au rythme de l'horloge interne du microprocesseur jusqu'à atteindre la valeur 0 (étape 130). Le passage à zéro du compteur CT provoque une interruption du microprocesseur qui effectue alors une opération de lecture de la porte PA7, si à cet instant de la séquence le conducteur $l_3$ présente toujours la valeur 0, il y a confirmation qu'il s'agit bien d'un signal START et non d'un parasite, la lecture de l'octet (étape 134) pourra alors s'effectuer.

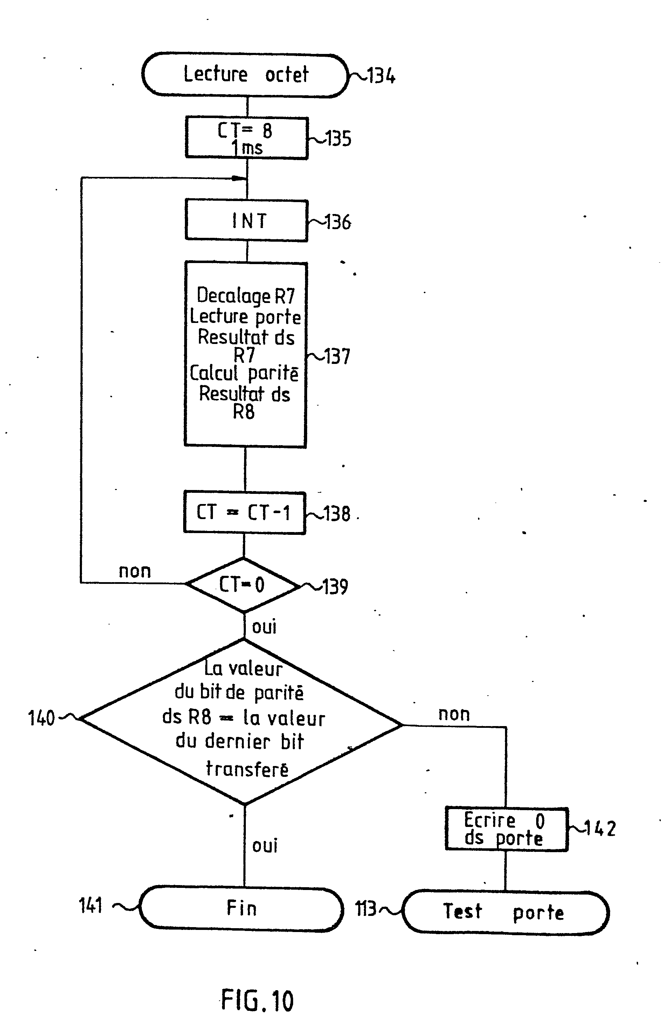

La figure 10 est une représentation de la séquence de lecture d'un octet. Le compteur de temps CT4 est chargé à une valeur de temps correspondant au temps nécessaire à la lecture des 8 bits transmis. Si la durée d'un bit est de 1 ms, la valeur du temps de transmission-chargée dans le compteur CT4 est de 8 ms. Chaque transfert d'un bit provoque une interruption du microprocesseur récepteur (étape 136) pour l'autoriser à mémoriser dans le registre R7 le bit lu sur la porte PA7, effectuer un calcul de parité sur les bits déjà reçus avec celui qui vient d'être reçu et charger le résultat de calcul de la parité dans le registre R8 (étape 137). Lorsqu'un octet a été transféré dans le registre R7, le compteur CT4 prend l'état 0 en même temps qu'est reçu le bit de parité transmis par l'émetteur. Une comparaison a alors lieu entre le bit transféré par l'émetteur et le bit précédemment calculé et mémorisé dans le registre R8 du récepteur (étape 140). S'il y a correspondance entre les 2 bits de parité, la transmission s'est effectuée sans erreur et est considérée comme terminée, par contre s'il y a une différence d'état entre les 2 bits de parité, il y a erreur de transmission, cette erreur est signalée à l'émetteur en forçant à l'état 0 le conducteur $l_3$ étape 142 et la séquence de test de l'état de la porte PA7 est reprise (étape 113).

Le système de scrutation de l'état du conducteur $l_3$ et de délivrance des signaux d'interruptions permet la synchronisation de l'envoi des messages à l'émission sur le fonctionnement de la station qui reçoit. On réalise ainsi un double niveau d'asynchronisme qui est : indépendant des fonctions traitées au niveau de chaque station, car en dehors des périodes d'interruption, les stations peuvent se livrer à l'exécution d'autres tâches complètement indépendantes les unes des autres, et indépendant des programmes du récepteur puisque les interruptions peuvent être produites à tout instant.

Les séquences qui viennent d'être décrites pourront être réalisées à l'aide de la liste des instructions suivantes inscrite dans la mémoire PROM7bis de la figure 2 en utilisant les instructions du microprocesseur INTEL 8080.

EMISSION

|  | Instructions | | Commentaires |
|---|---|---|---|
| 100 | OUT PA | | Porte A $\longleftarrow$ 0 |
| 101 | LHLD | | |
| 102 | MOVA,M | | (Initialisation du compteur CT4) |
| 103 | MOV CT,A | | CT $\longleftarrow$ A |
| 104 | LHLD | | |
| 105 | MOV B,M | | B $\longleftarrow$ 0 |
|  | INT | | (Interruption compteur de temps) |
| 106 | LDA | | A $\longleftarrow$ 8 |

```
107   SBB  B
108   JZ   NEXT (113)
109   LDA                        A ←——— R7
10A   OUT Porte A
10B   MOV C,A                    C ←——— A
10C   ANA                        Masque 1 000 000
10D   XRA,M                      Calcul de parité A
                                 A0 ←——— R8 + A0

10E   LHLD
10F   MOV M,A                    parité dans R8
110   MOV A,C                    A ←——— R7
111   RLC                        décalage R7
112   MOV M,A                    R7 ←——— A ·
113   LDA                        A ←——— R8
114   OUT Porte A
115   NOP
116   IN PORTE A
117   CPI                        Si 1 = Erreur
118   JNC  NEXT (100)
119   RET                        Fin
```

Test Porte

```
11A   IN  Porte A                A0 ←——— Etat de PA7
11B   CMP M                      Comparer A0 à 1
                                 faire S=1 dans PSW si #
11C   RM  NEXT=(11A)             si S=1 retour en 11A
11D   LHLD                       Charger H,L avec le
                                 contenu de la mémoire
                                 trouvé aux adresses
                                 qq et PP. A   N
11F   MOV CT,A                   CT ←——— N
120   RET
```

START

```
121   IN  Porte A
122   CMP M

123   RM  NEXT (121)
124   LHLD
125   MOV A,M
126   MOV CT,A
127   RET


INT. START

128   PUSH PSW
129   IN  PORTE A
12A   CMP  M

12B   RM   NEXT (128)
12C   CNZ  Lecture Octet


LECTURE OCTET

12D   LHLD
12E   MOV A,M
12F   MOV CT,A
130   LX1 B
131   RET
      INT
132   LHLD
133   MOV A,M
134   RLC
135   MOV D,A
136   IN Porte A
137   MOV E,A
138   LHLD
139   XRA
13A   MOV M,A
```

Faire S←1 dans PSW
si #
Retour en 121 si S = 1

Sauver A et PSW

Faire Z=0 de PSW
si porte = 0
Si Z=1 retour en 128

B ←—— 0

Adressage de R8
Parité dans A
Parité dans R8

```
13B    MOV AE
13C    ORA D
13D    LHLD                    Adressage de R7
13E    MOV M,A                 R7 ←── A
13F    INX B
140    LDA                     A ←── 8
141    SBB B
142    JP                      Z ←── 1 de PSW sur = 0
143    RET
144    MOV A,E
145    LHLD                    Adressage de R8
146    CMP M
147    JZ    NEXT(149)         Faire Z=1 ds PSW s'il y
                               a égalité
148    Fin
149    OUT porte A
150    CALL test porte
```

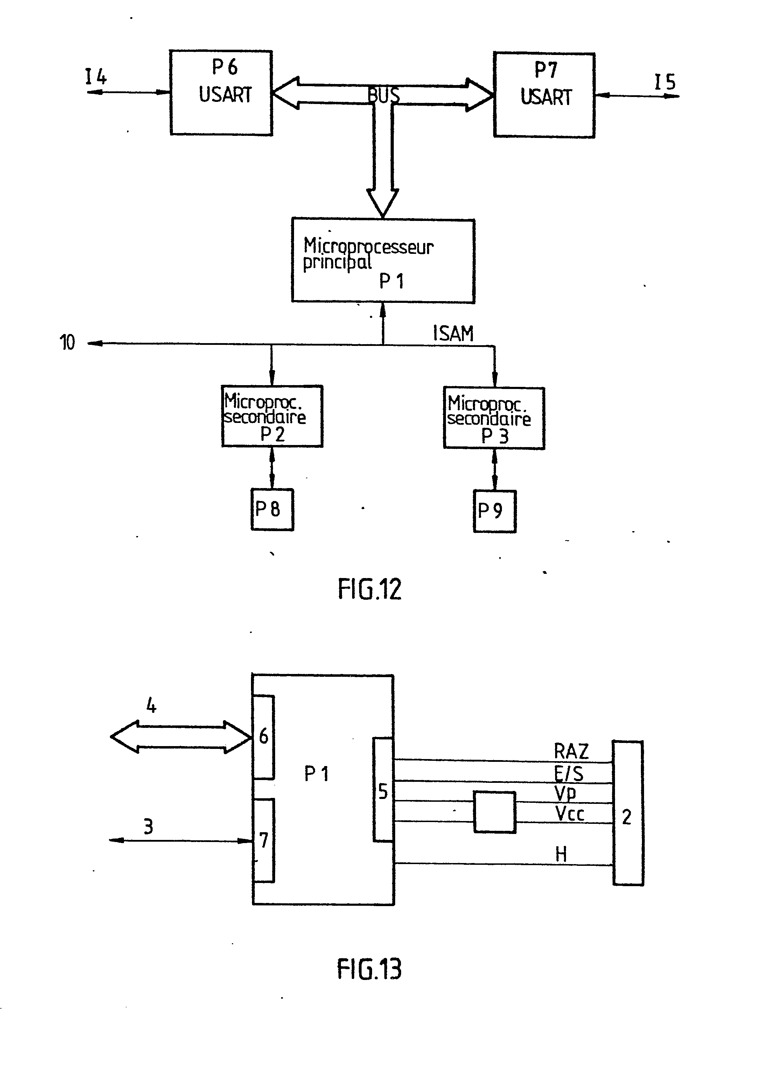

Sur la figure 11 on peut remarquer que le coupleur $C_1$ est cette fois muni de deux interfaces série $I_4$ et $I_5$ en combinaison avec l'interface bidirectionnel $I_3$ qui permet de connecter le support amovible.

Cette disposition est très intéressante car elle permet de connecter un, ou plusieurs supports sur une ligne de communication existante.

Par exemple, il est intéressant de connecter un tel support afin de chiffrer ou déchiffrer les données transitant entre un terminal et un ordinateur central afin d'assurer la confidentialité des échanges.

Le même dispositif peut servir à contrôler l'accès à des bases de données ou des informations confidentielles.

Toutes ces connexions sont permises grâce à l'utilisation simultanée de deux interfaces série en combianison avec l'interface bidirectionnel permettant de dialoguer avec le support amovible.

Les deux dispositions (figures 1 et 11) ont été données à titre d'exemple et sont les plus caractéristiques, mais on comprend qu'elles ne sont pas limitatives et l'homme de l'art pourra aisément étendre les possibilités du coupleur en adjoignant d'autres interfaces, soit du type série, soit du type parallèle de façon à s'adapter à chaque situation.

La figure 12 donne un exemple de réalisation du coupleur basé sur l'utilisation d'un microprocesseur central et de circuits spécialisés permettant de supporter les différentes interfaces.

Le microprocesseur principal P1 peut être réalisé à partir d'un microprocesseur type 8080 associé à sa mémoire. Cette mémoire contient le programme qui a pour rôle principal de gérer les différentes interfaces.

Les interfaces $I_4$ et $I_5$ sont de même nature et sont pilotés par des USART (Universal Synchronous Asynchronous Receiver Transiter) du type 8251 déjà rencontrés. Les techniques de dialogue entre le microprocesseur principal P1 et les USART P6 et P7 ne posent pas de problèmes particuliers. Cependant, il est nécessaire de prévoir un temps de traitement suffisamment court afin de ne pas perturber les vitesses sur les interfaces $I_4$ et $I_5$ principalement lorsque le coupleur est inséré sur une ligne. On doit également assurer la transparence du dialogue au niveau protocole en détectant les signaux de service de l'émetteur.

Cette disposition est particulièrement intéressante pour chiffrer les données transitant sur la ligne par

- 17 -

0048662

l'intermédiaire du microprocesseur principal en combinaison avec des données issues du support amovible. Le programme de chiffrement est alors contenu dans la mémoire du microprocesseur P1.

La figure 13 montre également comment se connectent sur l'interface l'ISAM, ces microprocesseurs secondaires qui gèrent l'interface des supports amovibles.

Dans l'exemple, on distingue deux microprocesseurs secondaires P2 et P3 qui constituent en réalité deux sous ensembles coupleurs combinant un interface de support amovible avec l'ISAM. Un tel interface est décrit dansilaedemande de brevet française No 80 19952 intitulé "Dispositif pour la transmission de signaux asynchrones entre plusieurs unités d'un système de traitement de l'information reliées par une ligne de transmission" déposée le même jour que la présente demande. En outre, l'ISAM peut être idsponible (10) à l'extérieur du coupleur de façon à étendre les possibilités de connexion de périphériques divers sur le coupleur.

La figure 14 donne un exemple de réalisation d'un coupleur "minimal" réalisé à partir d'un microprocesseur monolithique P1 du type 8048 commecialisé par la société INTEL.

On remarque que ce coupleur constitue à lui seul un mode de réalisation des microprocesseurs secondaires de la figure 13 puisqu'il combine l'interface du support amovible $I_2$ avec l'ISAM $I_3$.

En outre il supporte un interface parallèle I4 pour assurer la connexion d'un support amovible sur une machine possédant cet interface.

L'interface du support amovible est supporté par la porte 5 qui comprend les circuits INTS déjà décrits.

L'interface parallèle est supporté par la porte 6 du microprocesseur qui se comporte exactement comme une porte standard de type 8255 déjà rencontrés.

L'interface ISAM est géré par le icroprocesseur principal 1 comme décrit dans la demande de brevet déjà citée décrivant cet interface.

L'exemple qui vient d'être donné d'une réalisation préférée de l'invention n'est nullement limitatif, il va de soi que tout homme de l'art bien au fait des techniques des systèmes de transmission de l'information pourra concevoir d'autres modes de réalisation de l'invention sans pour autant sortir de son cadre.

0048662

- 1 -

1. Appareil de couplage ou d'adaptation d'un supprt électronique amovible sur un autre équipement électronique caractérisé en ce qui'l comprend un premier moyen I3 de réception et de connexion d'au moins un support amovible, un deuxième moyen (INT, S1) de dialogue bidirectionnel entre le dit support amovible et le coupleur pour échanger des informations entre le dit support amovible et le coupleur, un troisième moyen de dialogue entre le coupleur et l'équipement pour échanger des informations entre le coupleur et l'équipement, des moyens (BA,BD,BC) de transmission des informations échangées entre les moyens de dialogue et disposés entre les dits deuxième et troisième moyens, le dit support amovible comprenant des moyens de connexion AC avec le premier moyen, des moyens de dialogue avec le deuxième moyen, des moyens de mémorisation volatiles ou non volatiles propres au support amovible.

2. Appareil selon la revendication 1 dont le deuxième moyen de dialogue bidirectionnel est caractérisé en ce qui'il ne comporte qu'une seule liaison pour transmettre les variations d'un seul et même signal entre l'appareil et le support amovible.

3. Appareil de couplage selon la revendication 1 caractérisé en ce que le coupleur et le support amovible sont respectivement l'émetteur et le récepteur des informations et réciproquement.

4. Appareil de couplage selon les revendications 1 et 2 caractérisé en ce que le récepteur signale à l'émetteur son état "prêt à recevoir" en positonnant la dite liaison dans un état permanent détectable par l'émetteur.

- 2 -                    0048662

5. Appareil de couplage selon les revendications 1 et 3 caractérisé en ce que le dit deuxième moyen signale au dit support amovible une erreur de transmission en positionnant la dite liaison dans un état détectable par l'émetteur différent de l'état "prêt à recevoir".

6. Appareil de couplage selon les revendications 1 et 2 caractérisé en ce que le dit deuxième moyen multiplexe sur la liaison des ordres et des informations codées entre l'émetteur et le récepteur ainsi que les compte rendus et des informations codées entre le récepteur et l'émetteur.

7. Appareil de couplage selon les revendications 1 et 2 caractérisé en ce que le dit troisième moyen transmet et reçoit plusieurs ensembles de données émises et reçues en parallèle.

8. Appareil de couplage selon la revendication 1 caractérisé en ce que le troisième moyen est constitué d'un ou plusieurs canaux pouvant émettre ou recevoir des données en série.

9. Appareil de couplage selon la revendication 1 caractérisé en ce que les signaux échangés par le troisième moyen peuvent avoir lieu indifféremment dans le mode série ou parallèle.

10. Appareil de couplage selon la revendication 1 caractérisé en ce qu'il comprend en outre des moyens de traitement de l'information.

FIG.1

FIG.11

FIG. 2

E — start Cb7 Cb6 Cb5 Cb4 Cb3 Cb2 Cb1 Cb0 PAR

R — PR — $V_0$

Reception — ER — $V_1$

FIG.3

FIG.4

0048662

FIG.5

FIG.6

0048662

FIG. 7

0048662

113 — TEST PORTE

114 — Lecture porte

non ← 1 —115

oui

CT ← N1 —116

H —117 → oui

CT ← CT-1 —118

non ← CT = 0 —119

INT —120

Lecture porte —121

122 — 1 → non

oui

Attente Start —123

FIG. 8

0048662

```
        ┌──────────────────┐
        │      START        ├──~124
        └────────┬─────────┘
                 │
        ┌────────┴─────────┐
        │  Lecture porte   ├──~125
        └────────┬─────────┘
                 │
    non      ◇  0 ?  ◇──~126
                 │
                oui
                 │
        ┌────────┴─────────┐
        │    CT ← N2        ├──~127
        └────────┬─────────┘
                 │
            ◇   H   ◇     oui
                 │
                128
                 │
        ┌────────┴─────────┐
        │  CT ← CT − 1      ├──~129
        └────────┬─────────┘
                 │
    non     ◇  CT = 0  ◇──~130
                 │
        ┌────────┴─────────┐
        │       INT         ├──~131
        └────────┬─────────┘
                 │
        ┌────────┴─────────┐
        │  Lecture porte   ├──~132
        └────────┬─────────┘
                 │
    133~   ◇   0 ?   ◇    non
                 │
                oui
        ┌────────┴─────────┐
        │  Lecture  octet  ├──~134
        └──────────────────┘
```

FIG. 9

```
        ┌──────────────────────┐
        │    Lecture  octet     │──134
        └──────────────────────┘
                   │
             ┌──────────┐
             │  CT= 8   │──135
             │  1ms     │
             └──────────┘
                   │
             ┌──────────┐
             │   INT    │──136
             └──────────┘
                   │
        ┌──────────────────────┐
        │  Decalage R7          │
        │  Lecture porte        │
        │  Resultat ds          │──137
        │      R7               │
        │  Calcul parité        │
        │  Resultat ds          │
        │      R8               │
        └──────────────────────┘
                   │
             ┌──────────┐
             │ CT = CT-1│──138
             └──────────┘
                   │
      non    ◇──────────◇
     ────────│  CT=0    │──139
             ◇──────────◇
                   │ oui
        ◇──────────────────────◇
        │  La valeur            │
        │  du bit de parité     │
   140──│  ds R8 = la valeur    │ non
        │  du dernier bit       │────────
        │  transfere            │
        ◇──────────────────────◇
                   │ oui              ┌──────────┐
                                      │ Ecrire 0 │──142
                                      │ ds porte │
                                      └──────────┘
        ┌──────────┐          ┌──────────────┐
   141──│   Fin    │      113──│ Test  porte  │
        └──────────┘          └──────────────┘
```

FIG.10

0048662

FIG.12

FIG.13

Office européen
des brevets

**RAPPORT DE RECHERCHE EUROPEENNE**

EP 81 40 1431

| Catégorie | DOCUMENTS CONSIDERES COMME PERTINENTS | | CLASSEMENT DE LA DEMANDE (Int. Cl.³) |
|---|---|---|---|
| | Citation du document avec indication, en cas de besoin, des parties pertinentes | Revendication concernée | |
| | MICROPROCESSORS, vol. 2, no. 1, février 1978 Londres, GB SMITH: "Microprocessor system design", pages 3-10 <br><br> * Figure 2 de page 5; figures 3,4 de page 6; page 7, première colonne, lignes 12-28 * <br><br> -- | 1,7,8, 10 | G 06 F 3/04 |
| | EDN, vol. 24, no. 5, mars 1979 Denver, US LEVASSEUR: "Simplify IEEE - 488 implementation with a multifunction interface", pages 105-113 <br><br> * Page 105, première colonne, lignes 1-11; figure 1; page 106, première colonne * <br><br> -- | 1,9,10 | |
| | FR - A - 2 280 143 (HONEYWELL) <br><br> * Page 2, lignes 30-34; page 4, lignes 1-35; page 7, lignes 28-36; figures 1,1A, 1B, 2 * <br><br> -- | 1 | |
| | NACHRICHTENTECHNISCHE FACHBERICH- TE, vol. 37, 1969, VDE Verlag GmbH Berlin, DE "Datenübertragung. Vorträge der Factagung Datenübertragung in Mannheim vom 19 bis 21 März 1969" FICK: "Probleme der Prozedur und der Sicherheit bei der Daten- übertragung in Fernsprech- und Telegraphennetzen", pages 431- 440 <br><br> * Page 432, lignes 7-9, 26,27; figure 1; page 433, lignes ./. | 1,4,5 | |

**DOMAINES TECHNIQUES RECHERCHES (Int. Cl.³)**

G 06 F 3/04
H 04 L 5/14

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 21-12-1981 | DHEERE |

Office européen
des brevets

**RAPPORT DE RECHERCHE EUROPEENNE**

| Catégorie | Citation du document avec indication, en cas de besoin, des parties pertinentes | Revendica-tion concernée |
|---|---|---|
| | 1-8 * | |
| | -- | |
| | GB - A - 1 428 704 (ICL) | 1,4,5 |
| | * Page 1, lignes 9-68, 83-88; page 2, lignes 3-9, 23-47, 59-63; page 3, lignes 6-9; figures 1-3 * | |
| | -- | |
| | FR - A - 2 397 027 (C.I.I.-HONEY-WELL) | 1,2 |
| | * Page 3, lignes 20-40; page 4, lignes 1-5; figures 1,2 * | |
| | ---- | |

## DOCUMENTS CONSIDERES COMME PERTINENTS

CLASSEMENT DE LA DEMANDE (Int. Cl. ³)

DOMAINES TECHNIQUES RECHERCHES (Int. Cl. ³)